# EUROPEAN PATENT SPECIFICATION

(11) **EP 3 658 877 B1**
(45) Date of publication and mention of the grant of the patent: **16.08.2023**
(21) Application number: 18753430.0
(22) Date of filing: 21.08.2018
(51) Int. Cl.: G01L 9/00, G01L 19/00, G01L 19/14

(54) **CERAMIC PRESSURE SENSOR**
KERAMISCHER DRUCKSENSOR
CAPTEUR DE PRESSION EN CÉRAMIQUE

(30) Priority: 15.09.2017 IT 201700103447
(43) Date of publication of application: 03.06.2020
(73) Proprietor: Kolektor Microtel S.p.A., 20065 Inzago (MI) (IT)
(72) Inventor: FACCHETTI, Fermo, 20060 Gessate (MI) (IT); LEMMA, Federico Domenico, 20060 Bellinzago Lombardo (MI) (IT); MAY, Roberto, 20159 Milano (MI) (IT)
(74) Representative: Rapisardi, Mariacristina
(86) International application number: PCT/EP2018/072497
(87) International publication number: WO 2019/052784

(56) References cited:
- EP-A2- 3 002 572
- DE-A1-102008 054 987
- DE-A1-102012 213 572
- DE-A1-102013 105 132
- JP-A- S61 253 437
- JP-A- S61 253 437
- US-A- 4 399 707
- US-A1- 2015 219 514

## Description

The present invention refers to a ceramic pressure sensor.

In various application sectors, such as industrial, medical, automotive, civil and aerospace, the use of ceramic pressure sensors integrated into a transducer for measuring the pressure of a liquid or gaseous fluid, is known.

A relevant ceramic pressure sensor is known from DE 10 2008 054987 A1. Further pressure sensors are known from US 4 399 707 A, DE 10 2012 213572 A1, DE 10 2013 105132 A1, JP S61 253437 A, EP 3 002 572 A2 and US 2015/219514 A1.

Ceramic sensors combine mechanical strength and the ability to operate in aggressive environments with reliability and stable performance.

The ceramic membrane, which is chemically inert, does not require any type of separator and can be in direct contact with most fluids, even some of the most aggressive ones.

Long term stability and a wide operating range both in terms of pressure and temperature are other important factors in favour of the versatility and reliability of ceramic pressure sensors.

These aspects, along with integration simplicity in all types of application, make both piezoresistive and capacitive ceramic sensors interesting and advantageous with respect to other technological solutions, both because of their excellent price-performance ratio and their wide application range.

Piezoresistive sensors with a ceramic membrane are generally made of alumina or the like, and can be of two types: flat sensors, wherein the membrane is fixed onto a distinct mechanical support, still made of ceramic, or monolithic sensors, comprising a single ceramic element, wherein one or more thinner parts act as a sensitive element and one or more thicker parts act as a mechanical support. The sensitive element is commonly known as the "membrane".

The membrane flexes due to pressure, and such flexion can be detected through the resistance variation of piezoresistive elements, normally arranged in a Wheatstone bridge. The resistors, made of piezoresistive material, are positioned in such a way that while the membrane flexes, two resistors (belonging to opposite sides of the bridge) elongate, causing an increase in resistance and at the same time the other two are compressed, causing a decrease in resistance.

The bridge is unbalanced and the output voltage is proportional to the pressure difference that caused the deformation.

In capacitive rather than piezoelectric type sensors, the pressure signal is detected by the capacity variation of a condenser due to the relative displacement of its plates, one of the plates being printed on the membrane and the other on the mechanical support. Such variation is compared with another condenser whose plates are instead fixed.

For all ceramic pressure sensors, in some cases there is a hole on the support, at the cavity: if this hole is open the system will work as a relative or differential sensor, whereas if it is closed and the cavity sealed it will work as an absolute sensor.

Flat piezoresistive sensors are typically made by printing this resistive bridge on the membrane through screen printing on the opposite side to the one in contact with the fluid, and by connecting this membrane to a mechanical support, typically obtained by moulding or laser cutting a flat sheet. To guarantee sufficient deformation space for the membrane and to define the mobile space thereof, the support is provided with a central recess, typically circular, placed at the deformable area of the membrane, where the piezoresistive elements are placed, and holes placed outside said cavity, on whose walls conductive material is deposited and that are connected electrically to the tracks on the membrane after the mechanical connection, e.g. by soldering or gluing with conductive resins. The same process is followed in the production of capacitive sensors.

Monolithic sensors are easier to make than flat sensors, as they do not require an electrical and mechanical connection between the membrane and the support, but are normally only used as relative and not absolute sensors.

It is to be noted that capacitive sensors cannot be made in this way as it is essential to have two walls facing each other and very close, as explained in the description of the operating principle thereof.

Known ceramic pressure sensors are generally made using thick-film technology that allows conductive, piezoresistive or other kinds of inks to be printed on materials such as ceramic.

The use of ceramic materials has great advantages from many points of view.

From a chemical point of view the ceramic used is inert to most acids and bases including, for example, almost all automotive or medical fluids.

From a mechanical point of view, the ceramic used has high structural strength (flexural strength between 300 and 700 MPa, compressive strength between 1800 and 4200 MPa).

From a technical point of view, the ceramic used has resistance to temperatures up to 1500 - 1700 °C, and low expansion and thermal conduction coefficients.

In the case of flat ceramic pressure sensors, the ceramic used makes gluing between the membrane and the support possible through vitreous resins fired at high temperature (400-850°C).

In a flat and absolute ceramic pressure sensor, the electronics for generating the electrical signal as a function of the deformation of the flexible membrane are protected in the closed chamber that is created between the two parts, but the electronics for conditioning the electrical signal generated are placed outside this chamber.

In a monolithic ceramic pressure sensor the support and the membrane in combination with each other do not protect either the electronics for the generation of the electrical signal as a function of the deformation of the flexible membrane or the electronics for conditioning the electrical signal generated.

In certain applications with strict requirements, and in general to improve the characteristics of the sensor, it is therefore necessary to have mechanical, thermal and chemical protection for unprotected electronic circuits.

For that purpose, resin or ink based coatings are used and/or relevant protective metal or plastic housings in which the sensors are inserted.

These protection techniques can be complex and bulky and create significant assembly, sealing and compatibility problems, as well as not reaching the performance levels permitted by ceramic. The technical task of the present invention is to eliminate the described drawbacks of the prior art.

Within the context of this technical task, an object of the invention is that of effectively but simply and cheaply protecting the electronics installed on a ceramic pressure sensor for increasing its durability and performance in terms of precision and accuracy in measurement.

The technical task, as well as these and other objects are achieved by a ceramic pressure sensor as defined in independent claim 1.

The great advantages of using ceramic for the protection element include its excellent chemical and thermal inertia, and its excellent mechanical characteristics.

The description refers to the attached drawings, in which:
figures 1a schematically shows sectional view of a flat ceramic pressure sensor in accordance with the claimed invention;
figures 1b, 1c, 1d and 1e, not being part of the claimed invention, schematically show sectional views of variants of a flat ceramic pressure sensor;
figures 2a, 2b, 2c, 2d and 2e, not being part of the claimed invention, schematically show sectional views of variants of a monolithic ceramic pressure sensor;

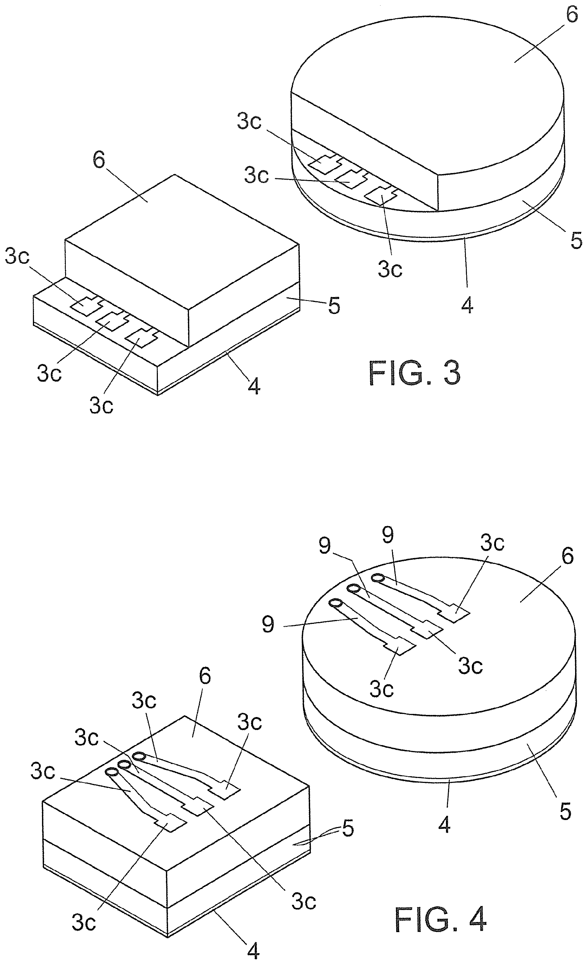

figure 3 shows possible layouts of a sensor in accordance with the invention, e.g. a flat sensor, with an electrical connection towards the outside through the joining area between the protective element and the support;
figure 4, not being part of the claimed invention, shows possible layouts of a sensor in accordance with the invention, e.g. a flat sensor, with an electrical connection towards the outside by means of through holes of the protective element.

Equivalent parts are indicated in the various preferred embodiments of the invention using the same reference number.

The ceramic pressure sensor 1 comprises a ceramic body 2 and an electronic circuit 3a, 3b, 3c supported by the ceramic body 2.

The electronic circuit 3a, 3b, 3c is provided with electrically conductive connection tracks 9. The ceramic body 2 in turn comprises a flexible membrane 4 made of ceramic material capable of being deformed as a result of the pressure to be sensed and a rigid support 5 made of ceramic material for supporting the flexible membrane 4.

The electronic circuit 3a, 3b, 3c is configured to generate an electrical signal as a function of the deformation of the flexible membrane 4.

The electronic circuit 3a, 3b, 3c comprises an analogue stage 3a for generating the electrical signal, a stage 3b for conditioning the acquired electrical signal, and a stage 3c for outputting the acquired signal and disposing an external reading of the same. The stage 3c is made so as to be compatible with the electrical connection methodologies available in the state of the art (it may be comprised of pins, tin-plated pads or other pads, connectors, etc...) The materials used in this stage are often noble or however adapted to operate even in aggressive environments, sometimes preventing a protection thereon.

The generating stage 3a comprises, for example, a Wheatstone bridge formed by a piezoresistive ink printed on the flexible membrane 4. The Wheatstone bridge is associated, for example, with one or more output calibration and thermal drift compensation resistances, the latter printed with ink having thermal drift characteristics suitable for the purpose.

According to the claimed invention, a protection element 6 is provided made of ceramic material permanently joined to the ceramic body 2.

The protection element 6 delimits with the ceramic body 2 a housing chamber 7 for housing at least part of the electronic circuit 3a, 3b, 3c.

The housing chamber 7, according to the type of pressure sensor 1, houses inside it the conditioning stage 3b and/or the generating stage 3a.

The housing chamber 7 is hermetically closed and can be placed under vacuum, filled with an inert gas, or with air at controlled humidity.

An electrical connection means 8 is provided for connecting the inside part of the electronic circuit 3a, 3b, 3c with the part of the electronic circuit 3a, 3b, 3c outside of the housing chamber 7.

At least the output stage 3c is always present outside the housing chamber 7.

The electrical connection means 8 comprises electrically conductive elements 8a, 8b, 8c, 8d passing through the wall of the housing chamber 7.

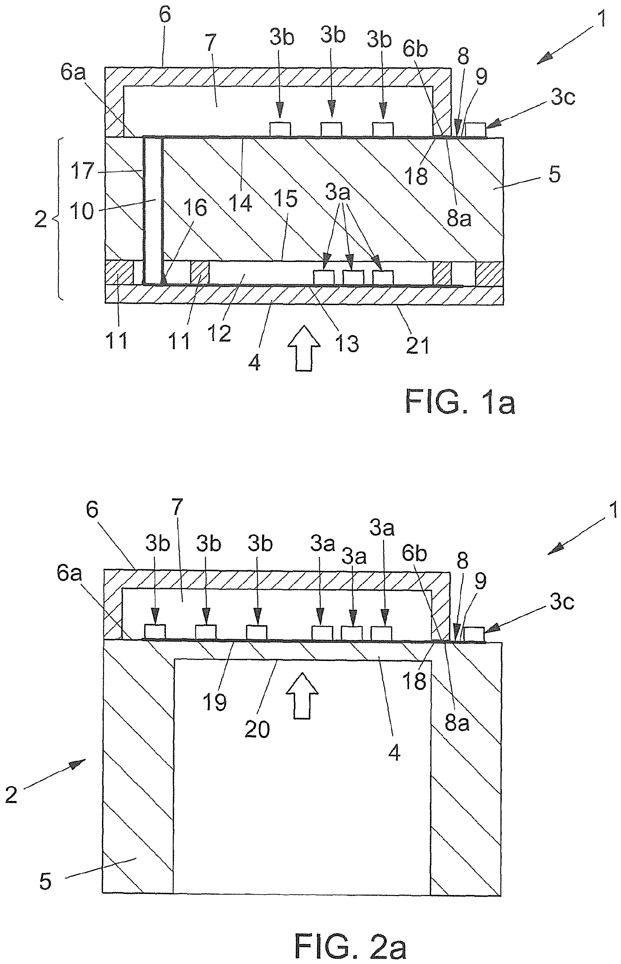

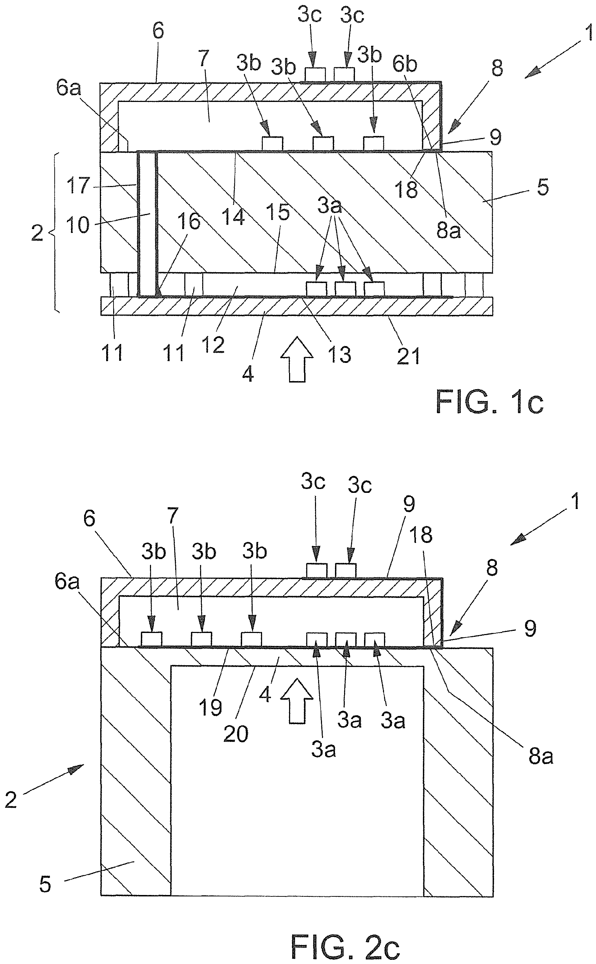

The electrically conductive elements 8a, 8b, 8c, 8d, comprise portions 8a of the conductive tracks 9 that cross the wall of the housing chamber 7 in the joining area 18 between the protection element 6 and the ceramic body 2 (solutions shown in figures 1a, and 2a, 1c, 2c which are not part of the invention). In this sense, the output part 3c of the signal of the circuit 3a, 3b, 3c can be realised on the same face 6a of the rigid support 5 where the remaining electronic circuit 3 is positioned (solutions shown in figures 1a, and 2a which is not part of the claimed invention).

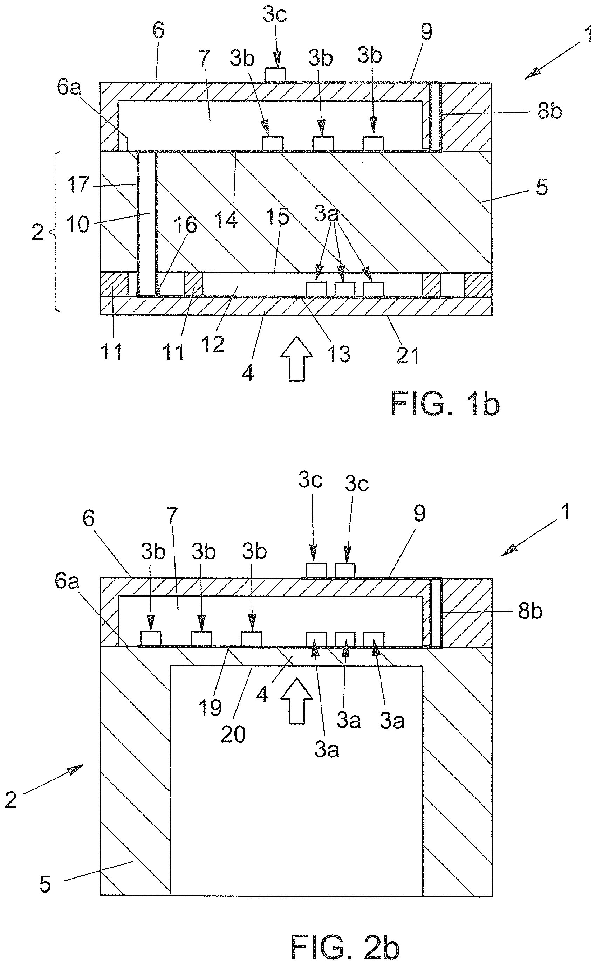

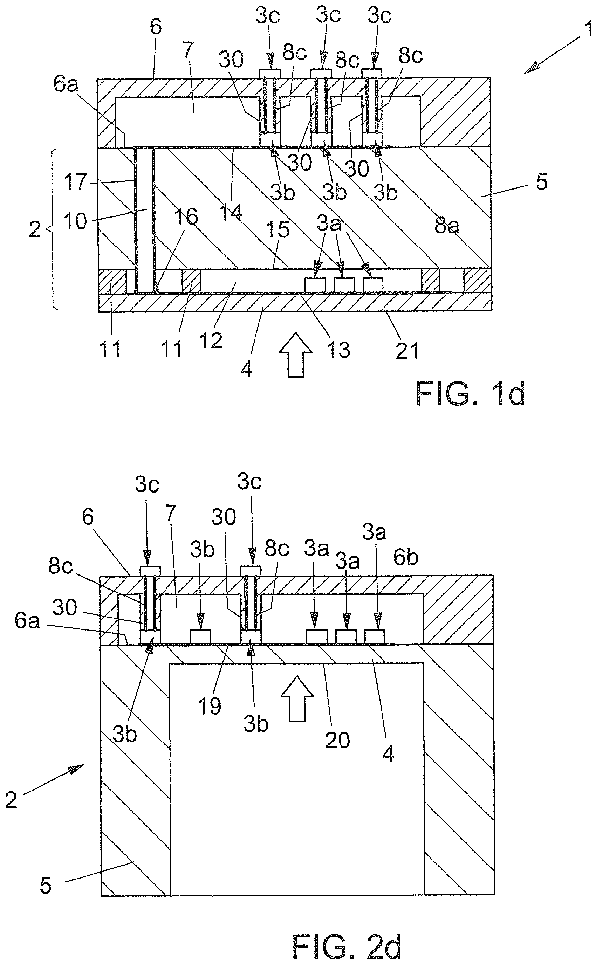

Alternatively, which does not fall withtin the scope of the claimed invention, the electrically conductive elements 8a, 8b, 8c, 8d can comprise metallised holes 8b passing through the walls of the protection element 6 (solutions shown in figures 1b, 2b, not being part of the claimed invention) or metallised holes 8c realised inside specific columns 30 inside the protection element 6 and passing through the walls of the protection element 6 (solutions shown in figures 1d, 2d, not being part of the claimed invention), the columns 30 being able to be realised in a single piece with the protection element 6.

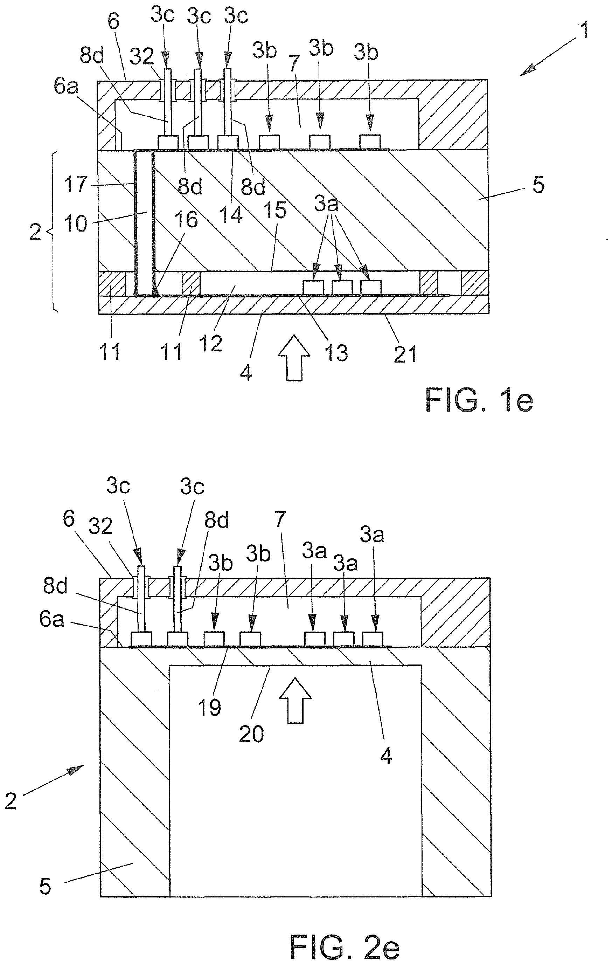

Alternatively, which does not fall withtin the scope of the claimed invention, the electrically conductive elements 8a, 8b, 8c, 8d can comprise pins 8d inside the protection element 6 and extending through holes 31 passing through the walls of the protection element 6 (solutions shown in figures 1e, 2e, not being part of the claimed invention). In this case the pins 8d can be soldered to pads provided between the discrete elements of the conditioning circuit 3b. The holes 31 can then be closed with an appropriate solder bead 32 around each of them. The ends of the pins 8d outside the housing chamber 7 constitute the signal outputting stage 3c.

More precisely, the protection element 6 is a concave element having a flat open base 6a.

The protection element 6 is entirely positioned inside the perimeter of a flat face 14, 19 of the ceramic body 2. Therefore, in practice, with reference to the figures, the dimensions of the protective element 6 are contained inside the vertical extension upwards of the side walls of the ceramic body 2.

The join of the protection element 6 to the ceramic body 2 is made by soldering, e.g. SMT (surface mounting technology) or by gluing with resin or low melting point glass.

The ceramic material, for example but not necessarily alumina based, is selected so as to give the protection element 6 suitable temperature resistance and stability, rigidity and mechanical and chemical strength properties.

With reference to figures 1a, a flat ceramic pressure sensor 1 is illustrated wherein the ceramic body 2 is formed by two distinct pieces mutually connected both electrically and mechanically, one defining the flexible membrane 4 and the other the support 5. The two pieces are formed by two overlapping flat sheets of different thicknesses oriented with their main lying plane parallel.

The sheets may have a circular or polygonal shape.

The thinnest sheet defines the flexible membrane 4 and the thickest sheet defines the support 5.

The support 5 is provided with through holes 10 having an electrically conductive coating 17, for example made of metal, for the electrical connection between the analogue generating stage 3a and the conditioning stage 3b.

The mechanical connection system appropriately keeps the main adjacent faces of the flexible membrane 4 and the support 5 distanced.

The mechanical connection system comprises a bead of adhesive 11 of a certain thickness, e.g. glass, which extends along a closed path so as to delimit with the main adjacent faces 13, 15 of the flexible membrane 4 and the support 5 a closed space 12 that contains the analogue stage 3a for generating the electrical signal.

If necessary, to give stability and resistance to the connection, various beads 11 of adhesive can be provided, one around the other.

The innermost bead 11 also delimits the flexible area of the membrane 4.

The realisation of the sensor 1 illustrated in figures 1a and 1b, 1c, 1d, 1e which are not part of the invention, 3 and 4 which is not part of the invention, preferably uses hybrid thick-film technology with the screen printing method.

The sheets that form the membrane 4 and the support 5 are made of ceramic material, for example but not exclusively alumina.

With the screen printing method, the electrically conductive tracks of the electronic circuit 3a, 3b, 3c and the related components are printed on the membrane 4 and on the support 5, e.g. for the signal generating stage 3a the resistances of the resistive bridge are printed on the main face 13 of the membrane 4 adjacent to the support 5, for the conditioning stage the resistance for resetting the resistive bridge, PTC or NTC for correcting the heat drift of the sensor, and the resistances for correcting the sensitivity of the cell are printed on the main face 14 of the support 5 opposite the membrane 4. Such resistances can also be printed on the main face 13. Simultaneously to such elements, additional elements can be printed, e.g. sensitive to temperature variation.

The conditioning stage 3b may also not comprise any resetting or compensation resistances, particularly if discrete components are to be used, suitable for the digital calibration of the signal. The pressurised fluid acts on the main face 21 of the membrane 4, opposite the one on which the electrical signal generating stage 3a is positioned (shown by an arrow in figures 1a and 1b, 1c, 1d, 1e, which are not part of the claimed invention).

The conductive tracks 9 are also printed on the main face 14 of the support 5 opposite the membrane 4.

The adhesive glass 11 for their mechanical join is also printed onto the main adjacent faces 13, 15 of the membrane 4 and of the support 5.

Each printing operation may be followed by a sintering step in the oven.

At this point the membrane 4 and the support 5 are joined and further sintering is performed in the oven.

The coupling takes place by overlapping the membrane 4 and the support 5 so that the glass areas 16 are overlapped becoming one piece.

At this point, the discrete components of the conditioning stage 3b, 3c are assembled such as, for example, condensers, transistors, integrated electronic circuits and connectors, with or without packages such as chip&wire or CSP (chip scale packages).

Finally, the protection element 6 is applied on the main face 14 of the support 5 opposite the membrane 4.

Reference is made specifically to figure 1a. The mechanical join and any electrical join between the protective element 6 and the above-described parts of the sensor can be performed in various ways, each of which is valid and provides the possibility for the housing chamber 7 to be hermetic. In a first sense, the protection element 6 can be soldered with SMT technology, having a base of the flat walls to face pads suitably provided on the main face 14. In this case the electrical join is performed at the same time as the mechanical one, suitably providing the soldering points. Alternatively, low melting point glass can be used, in a similar way to what is described for the join between the membrane and the support, both in relation to the mechanical join and the electrical one. Alternatively, resins may be used, possibly preformed or deposited on one or both of the faces in contact. In this case, the mechanical and electrical join can be performed simultaneously, as long as electrically conductive resins are used in the electrical contact areas. In the only mechanical contact and hermetic seal areas, a non-conductive resin can also be used. The use of two different resins requires them to have a compatible polymerisation process. The base 6a of the protection element 6 for that purpose may have grooves 6b in which the conductive tracks 9 pass, but alternatively it is possible not to provide such grooves as the thickness of the tracks is negligible with respect to the thickness of the bead of material in relation to the join of the protection element 6 to the support 5. Further, as glass has a certain fluidity, it can balance such thicknesses, thus realising a uniform bead also in the areas overlapping with the conductive tracks 9. The wall of the protection element 6 is arranged straddling the electrically conductive tracks 9 that are therefore able to conduct the electrical signal of the electronic circuit outside the housing chamber 7.

With reference to figures 2a - 2e, not being part of the claimed invention, a monolithic ceramic pressure sensor 1 is illustrated wherein the ceramic body 2 is formed in a single piece that defines the flexible membrane 4 in a thinner area thereof and the support 5 in an increased thickness area thereof.

The parts 3a, 3b of the electronic circuit 3a, 3b, 3c are fully positioned on the main face 19 of the membrane 4 opposite the main face 20 of the membrane 4 on which the pressurised fluid acts (shown by an arrow in figures 2a - 2e,_not being part of the claimed invention).

Also the realisation of the sensor 1 illustrated in figures 2a - 2e not being part of the invention, preferably uses hybrid thick-film technology with the screen printing method.

The ceramic body 2 is made of ceramic material, e.g. alumina.

With the screen printing method, the electrically conductive tracks of the electronic circuit 3a, 3b, 3c and the related components are printed on the main face 19 of the membrane 4, e.g. for the generating stage 3a the resistances of the resistive bridge are printed, for the conditioning stage the resistance for resetting the resistive bridge, PTC or NTC for correcting the heat drift of the sensor, and the resistances for correcting the sensitivity of the cell are printed. Simultaneously to such elements, additional elements can be printed, e.g. sensitive to temperature variation.

The conditioning stage 3b may also not comprise any resetting or compensation resistances, particularly if discrete components are to be used, suitable for the digital calibration of the signal. The conductive tracks 9 are also printed on the main face 19 of the membrane 4.

Each printing operation may be followed by a sintering step in the oven.

At this point the discrete components of the conditioning stage 3b are mounted such as condensers, transistors, integrated electronic circuits and connectors.

Finally, the protection element 6 is applied on the main face 19 of the membrane 4.

The protection element 6 is applied with analogous methods to those described above for the flat ceramic sensor.

Reference is made specifically to figure 2a not being part of the claimed invention. The wall of the protection element 6 is arranged straddling the electrically conductive tracks 9 that are therefore able to conduct the electrical signal of the electronic circuit outside the housing chamber 7. The base 6a of the protection element 6 for that purpose has grooves 6b in which the conductive tracks 9 pass.

The invention provides a new and more efficient method of protecting the electronic components mounted on the ceramic body 2.

The protection is due to the ceramic element 6 that can have a variable shape and size, and that is realised such as to have a housing chamber 7 inside it of suitable dimensions to contain the objects to be protected.

The objects to be protected may be electronic (microcontrollers, resistances, etc...), analogue parts of the sensor (inks of various kinds) or connectors, pads, pins or the like.

More generally, any object of a suitable size and shape to be contained in the housing chamber 7 can be protected.

The ceramic element 6 is, as mentioned, coupled permanently to the ceramic body 2 so as to make the contents of the sensor 1 hermetic.

The ceramic element 6 further also cooperates to realise the electrical connection towards the outside of the sensor 1.

The sensor thus realised has all the advantages of ceramic described above from a chemical, thermal and mechanical point of view. Through the invention, it becomes not strictly necessary to introduce housings or other protection elements of another kind.

The creation of a hermetically closed housing chamber in a controlled atmosphere, vacuum, or at controlled humidity, prevents any problems due to corrosion, condensation, etc.

The material of the ceramic body 2 may be different from that of the ceramic protection element 6 but compatible with the described processes.

The pressure sensor as conceived herein is susceptible to many modifications and variations, all falling within the scope of the inventive concept as defined by the appended claim.

In practice the materials used, as well as the dimensions, can be any according to the needs and the state of the art.

For example, for descriptive purposes reference has been made above to a piezoresistive ceramic pressure sensor but the teachings of the invention can be extended to a capacitive type ceramic sensor.

## Claims

1. A ceramic pressure sensor (1) comprising a ceramic body (2), comprising a flexible membrane (4) made of ceramic material capable of being deformed as a result of the pressure to be sensed and a rigid support (5) made of ceramic material for supporting the flexible membrane (4), said ceramic body (2) being formed by two distinct pieces mutually connected both electrically and mechanically, one defining the flexible membrane (4) and the other the rigid support (5), said two distinct pieces being formed by two overlapping flat sheets of different thicknesses oriented with their main lying plane parallel and an electronic circuit (3a, 3b, 3c) supported by the ceramic body (2) and comprising electrically conductive connection tracks (9) and a resistive bridge screen printed onto said flexible membrane (4) and the electrically conductive tracks (9) screen printed onto one flat face (14) of said rigid support (5), said electronic circuit (3a, 3b, 3c) being configured to generate an electrical signal as a function of the deformation of the flexible membrane (4), **characterised in that** the ceramic pressure sensor (1) further comprises a protection element (6) made of ceramic material permanently joined to said one a flat face (14) of said rigid support (5) opposite the membrane (4), said protection element (6) being entirely positioned inside the perimeter of said one flat face (14) and delimiting with said one flat face (14) of said rigid support (5) of said ceramic body (2) a housing chamber (7) for housing at least part of said electronic circuit (3a, 3b, 3c), there being further provided an electrical connection means (8) for connecting said at least a part of the electronic circuit (3a, 3b, 3c) with the outside of said housing chamber (7), said electronic circuit (3a, 3b, 3c) comprising an analogue stage (3a) for generating the electrical signal, a conditioning stage (3b) for conditioning the acquired electrical signal comprising discrete components positioned in said housing chamber (7) on said one flat face (14) of said rigid support (5) of said ceramic body (2), and a outputting stage (3c) for outputting the acquired signal and disposing an external reading of the same, said outputting stage (3c) being positioned outside of said housing chamber (7) on said one flat face (14) of said rigid support (5), said electric conductive tracks (9) screen printed onto said rigid support (5) comprising electric conductive tracks (9) of said conditioning stage (3b) and said outputting stage (3c) screen printed on said one flat face (14) of said rigid support (5), said electrical connection means (8) comprising portions (8a) of said electric conductive tracks (9) that cross the wall of the housing chamber (7) in a joining area (18) between the protection element (6) and the rigid support (5) of the ceramic body (2).

## Patentansprüche

1. Keramischer Drucksensor (1) mit einem keramischen Körper (2), der eine biegsame Membran (4) aus keramischem Material, die infolge des zu erfassenden Drucks verformt werden kann, und einen starren Träger (5) aus keramischem Material zum Tragen der biegsamen Membran (4) umfasst, wobei der keramische Körper (2) aus zwei getrennten Teilen besteht, die sowohl elektrisch als auch mechanisch miteinander verbunden sind, wobei das eine die flexible Membran (4) und das andere den starren Träger (5) bildet, wobei die beiden getrennten Teile aus zwei sich überlappenden flachen Platten unterschiedlicher Dicke gebildet sind, die so ausgerichtet sind, dass ihre Hauptebenen parallel verlaufen, und eine elektronische Schaltung (3a, 3b, 3c), die von dem keramischen Körper (2) getragen wird und elektrisch leitende Verbindungsbahnen (9) und eine Widerstandsbrücke umfasst, die auf die flexible Membran (4) gedruckt sind, und die elektrisch leitenden Bahnen (9), die auf eine flache Seite (14) des starren Trägers (5) gedruckt sind, wobei die elektronische Schaltung (3a, 3b, 3c) konfiguriert ist, um ein elektrisches Signal als eine Funktion der Verformung der flexiblen Membran (4) zu erzeugen, **dadurch gekennzeichnet, dass** der keramische Drucksensor (1) außerdem ein Schutzelement (6) aus keramischem Material umfasst, das dauerhaft mit der flachen Seite (14) des starren Trägers (5) gegenüber der Membran (4) verbunden ist, wobei das Schutzelement (6) vollständig innerhalb des Umfangs der einen ebenen Fläche (14) positioniert ist und mit der einen ebenen Fläche (14) des starren Trägers (5) des Keramikkörpers (2) eine Gehäusekammer (7) zur Aufnahme mindestens eines Teils der elektronischen Schaltung (3a, 3b, 3c) begrenzt, wobei ferner ein elektrisches Verbindungsmittel (8) zur Verbindung des mindestens einen Teils der elektronischen Schaltung (3a, 3b, 3c) mit der Außenseite der Gehäusekammer (7), wobei die elektronische Schaltung (3a, 3b, 3c) eine analoge Stufe (3a) zum Erzeugen des elektrischen Signals, eine Aufbereitungsstufe (3b) zum Aufbereiten des erfassten elektrischen Signals, die diskrete Komponenten umfasst, die in der Gehäusekammer (7) auf der einen flachen Seite (14) des starren Trägers (5) des Keramikkörpers (2) angeordnet sind und eine Ausgabestufe (3c) zum Ausgeben des erfassten Signals und zum Bereitstellen einer externen Ablesung desselben, wobei die Ausgabestufe (3c) außerhalb der Gehäusekammer (7) auf der einen ebenen Fläche (14) des starren Trägers (5) positioniert ist, wobei die auf den starren Träger (5) siebgedruckten elektrischen Leiterbahnen (9) elektrische Leiterbahnen (9) der Konditionierungsstufe (3b) und der Ausgabestufe (3c) umfassen, die auf die eine ebene Fläche (14) des starren Trägers (5) siebgedruckt sind, wobei die elektrischen Verbindungsmittel (8) Abschnitte (8a) der elektrischen Leiterbahnen (9) umfassen, die die Wand der Gehäusekammer (7) in einem Verbindungsbereich (18) zwischen dem Schutzelement (6) und dem starren Träger (5) des Keramikkörpers (2) kreuzen.

## Revendications

1. Capteur de pression en céramique (1) comprenant un corps en céramique (2) constitué d'une membrane souple (4) en matériau céramique capable de se déformer sous l'effet de la pression à détecter et d'un support rigide (5) en matériau céramique destiné à soutenir la membrane souple (4), ledit corps en céramique (2) est formé de deux pièces distinctes reliées entre elles électriquement et mécaniquement, l'une définissant la membrane souple (4) et l'autre le support rigide (5), lesdites deux pièces distinctes étant formées de deux feuilles plates superposées d'épaisseurs différentes orientées avec leur plan principal parallèle, et un circuit électronique (3a, 3b, 3c) supporté par le corps céramique (2) et comprenant des pistes de connexion électriquement conductrices (9) et un pont résistif sérigraphiés sur ladite membrane souple (4) et les pistes électriquement conductrices (9) sérigraphiées sur une face plane (14) dudit support rigide (5), ledit circuit électronique (3a, 3b, 3c) étant configuré pour générer un signal électrique en fonction de la déformation de la membrane souple (4), **caractérisé en ce que** le capteur de pression céramique (1) comprend en outre un élément de protection (6) en matériau céramique relié de façon permanente à face plane (14) dudit support rigide (5) opposée à la membrane (4), ledit élément de protection (6) étant entièrement positionné à l'intérieur du périmètre de ladite face plane (14) et délimitant avec ladite face plane (14) dudit support rigide (5) dudit corps céramique (2) une chambre de logement (7) pour loger au moins une partie dudit circuit électronique (3a, 3b, 3c), étant en outre prévu un moyen de connexion électrique (8) pour connecter ladite au moins une partie du circuit électronique (3a, 3a, 3b, 3c) avec l'extérieur de ladite chambre de logement (7), ledit circuit électronique (3a, 3b, 3c) comprenant un étage analogique (3a) pour générer le signal électrique, un étage de conditionnement (3b) pour conditionner le signal électrique acquis comprenant des composants discrets positionnés dans ladite chambre de logement (7) sur ladite face plate (14) dudit support rigide (5) dudit corps en céramique (2), et un étage de sortie (3c) pour la sortie du signal acquis et la disposition d'une lecture externe de celui-ci, ledit étage de sortie (3c) étant positionné à l'extérieur de ladite chambre de logement (7) sur ladite face plane (14) dudit support rigide (5), lesdites pistes conductrices électriques (9) sérigraphiées sur ledit support rigide (5) comprenant les pistes conductrices électriques (9) dudit étage de conditionnement (3b) et ledit étage de sortie (3c) sérigraphié sur ladite face plane (14) dudit support rigide (5), ledit moyen de connexion électrique (8) comprend des parties (8a) desdites pistes conductrices d'électricité (9) qui traversent la paroi de la chambre de logement (7) dans une zone de jonction (18) entre l'élément de protection (6) et le support rigide (5) du corps en céramique (2).
